# EUROPEAN PATENT SPECIFICATION

(11) **EP 1 706 444 B1**
(45) Date of publication and mention of the grant of the patent: **02.01.2008**
(21) Application number: 04811692.5
(22) Date of filing: 19.11.2004
(51) Int. Cl.: C08J 3/00, C08J 5/20

(54) **PROCESS FOR MAKING A SOLUTION OF PERFLUOROSULFONATED ION EXCHANGE POLYMERS**
VERFAHREN ZUR HERSTELLUNG EINER LÖSUNG VON PERFLUORSULFONIERTEN IONENAUSTAUSCHPOLYMEREN
PROCEDE DE PREPARATION D'UNE SOLUTION DE POLYMERES ECHANGEURS D'IONS PERFLUOROSULFONES

(30) Priority: 25.11.2003 US 525012
(43) Date of publication of application: 04.10.2006
(73) Proprietor: INVISTA Technologies S.à.r.l., 8001 Zürich (CH)
(72) Inventor: SUN, Qun, Wilmigton, Delaware 19808 (US)
(74) Representative: Cockerton, Bruce Roger
(86) International application number: PCT/US2004/039013
(87) International publication number: WO 2005/054342

(56) References cited:
- WO-A-03/006537
- US-A- 4 433 082
- US-A- 4 731 263

## Description

### CROSS-REFERENCE TO RELATED APPLICATION

This application claims benefit of priority from Provisional Application No. 60/525,012 filed November 25, 2003.

### BACKGROUND OF THE INVENTION

### 1. Field of the Invention

The present invention relates to making a solution of perfluorosulfonated ion exchange polymers (PFSI). More particularly the invention relates to dissolving the PFSI in a mixture of ether and water under pressure and elevated temperature, and recovering the solid content of the PFSI solution. The solid content, which is a PFSI resin, is useful in the manufacture of coated fabrics for chemical barrier applications.

### 2. Description of the Related Art

There is much renewed interest in using perfluorosulfonated ion exchange resins in the fuel cell applications, as well as other applications, such as making PFSI/SiO₂ composite catalysts, coating electrodes, casting membranes and so on. In all these applications, the starting material of a PFSI is dispersed in a solution. The current commercial practice for making a PFSI dispersion is based on the art disclosed in the US Patent 4,433,082 to Grot. The process involves heating a PFSI in a sulfonic acid or a salt form in a mixture of lower alcohols and water to >180°C, and in most cases >220°C. Since the acid could catalyze the dehydration of alcohols to form mixed ethers and olefins under those conditions, the process produces a large amount of impurities that are volatile organic compounds (VOC's) and leads to higher pressures when a PFSI acid dispersion is made.

A recent US Patent 6,150,426 to Curtin and Howard uses mixtures of water and water immiscible organic compounds such as benzene, toluene, cyclohexane and so on to dissolve the PFSI. A PFSI solution with higher resin concentration can be made with this method. However, this method typically requires a higher processing temperature, i.e., >220°C. One should point out that under elevated temperature the liquid mixture with the PFSI in the acid form becomes very corrosive and could dissolve a small amount of the metal from the reaction vessel and contaminate the solution. Therefore, it is very desirable to make the PFSI solution under milder conditions. A pending US Patent application to Sun, FL0195 USPRV, U.S. Application 60/305,129, filed July 13, 2001, and FL0195 USNA, U.S. Application No. 10/194,491, filed July 12, 2002, discloses a method to dissolve the PFSI in a mixture of tetrahydrofuran (THF) and water, which could be effective at temperatures as low as 180°C. However, THF is a suspected carcinogen. In many circumstances it may not be very desirable to use THF as the co-solvent.

### SUMMARY OF THE INVENTION

The present invention overcomes the problems associated with the prior art by providing a process for making a PFSI solution under milder conditions than in the prior art. This solid content of this polymer solution, which is a PFSI resin, is readily converted into films for lamination on fabrics, particularly nylon fabrics. The resulting laminated fabrics form the basis of chemical and biological agent barriers for use in certain types of apparel.

Therefore, in accordance with the present invention, there is provided a process for making a solution of perfluorosulfonated ion exchange polymer under relatively mild conditions.

Thus, the present application relates to a process for making a solution of perfluorosulfonated ion exchange polymer comprising:
heating a slurry containing a perfluorosulfonated ion exchange polymer resin, and an organic ether compound selected from the group consisting of tetrahydropyran and ethyl propyl ether;
and water in a mechanically agitated pressurized vessel to an elevated temperature between 200°C to 250°C, so as to totally dissolve the resin in the ether compound and water solution; and
recovering the perfluorosulfonated ion exchange polymer solution.

This resin can be coated onto a fabric, or can be used to make a film which is laminated onto a fabric.

### DETAILED DESCRIPTION OF THE PREFERRED EMBODIMENTS

### The PFSI Polymers

The polymers in use in accordance with the present invention are perfluorosulfonated ion exchange resins in the general functional group -SO₃X wherein X is H, Li, Na, K or N(R¹)(R²)(R³)(R⁴) and R¹, R², R³, and R⁴ are the same or different and are H, CH₃, C₂H₅ and higher alkyl groups. Preferably, the polymer comprises a polymer backbone with recurring side chains attached to the backbone, the side chains carrying cation exchange groups. Polymers used with the present invention are typically copolymers formed from a nonfunctional monomer and a second monomer carrying the cation exchange group or its precursor, e.g., a sulfonyl fluoride group (-SO₂F), which can be subsequently hydrolyzed to a sulfonate functional group. For example, copolymers of a first fluorinated vinyl monomer together with a second fluorinated vinyl monomer having a sulfonyl fluoride group (-SO₂F) can be used. Possible first monomers include tetrafluoroethylene (TFE), hexafluoropropylene (HFP), and mixtures thereof. Possible second monomers include a variety of fluorinated vinyl ethers with sulfonate functional groups or precursor groups that can provide the desired side chain in the polymer. Additional monomers can also be incorporated into these polymers if desired. Preferred polymers for use in the present invention include a highly fluorinated, most preferably perfluorinated, carbon backbone and side chains represented by the formula

-(O-CF₂CFR_{f})ₐ-O-CF₂CFR'_{f}SO₃X

wherein R_{f} and R'_{f} are independently selected from F, Cl or a perfluorinated alkyl group having 1 to 10 carbon atoms, a = 0, 1 or 2, and X is defined above. The preferred polymers include, for example, polymers disclosed in U.S. Patent 3,282,875 and in U.S. Patents 4,358,545 and 4,940,525. An example of preferred polymer comprises a perfluorocarbon backbone and the side chain is represented by the formula

-O-CF₂CF(CF₃)-O-CF₂CF₂SO₃X

where X is as defined above. Polymers of this type are disclosed in U.S. Patent 3,282,875 and can be made by copolymerization of tetrafluoroethylene (TFE) and the perfluorinated vinyl ether CF₂=CF-O-CF₂CF(CF₃)-O-CF₂CF₂SO₂F, perfluoro (3,6-dioxa-4-methyl-7-octenesulfonyl fluoride) (PDMOF), followed by conversion to sulfonate groups by hydrolysis of the sulfonyl fluoride groups and ion exchanged as necessary to convert to the desired ionic form. An example of a preferred polymer of the type disclosed in U.S. Patents 4,358,545 and 4,940,525 has the side chain -O-CF₂CF₂SO₃X, wherein X is as defined above. This polymer can be made by copolymerization of tetrafluoroethylene (TFE) and the perfluorinated vinyl ether CF₂=CF-O-CF₂CF₂SO₂F, perfluoro (3-oxa-4-pentenesulfonyl fluoride) (POPF), followed by hydrolysis and further ion exchange as necessary.

The polymers of this invention have an ion exchange ratio of less than about 33. In this application, "ion exchange ratio" or "IXR" is defined as number of carbon atoms in the polymer backbone in relation to the cation exchange groups. Within the range of less than about 33, IXR can be varied as desired for the particular application. With most polymers, the IXR is preferably about 3 to about 33, more preferably about 8 to about 23.

For polymers of this type, the cation exchange capacity of a polymer is often expressed in terms of equivalent weight (EW). For the purposes of this application, equivalent weight (EW) is defined to be the weight of the polymer in acid form required to neutralize one equivalent of sodium hydroxide. In the case of a sulfonate polymer where the polymer has a perfluorocarbon backbone and the side chain is -O-CF₂-CF(CF₃)-O-CF₂-CF₂-SO₃H (or a salt thereof), the equivalent weight range which corresponds to an IXR of about 8 to about 23 is about 750 EW to about 1500 EW. IXR for this polymer can be related to equivalent weight using the following formula: 50 IXR + 344 = EW. While generally the same IXR range is used for sulfonate polymers disclosed in U.S. Patents 4,358,545 and 4,940,525, e.g., the polymer having the side chain -O-CF₂CF₂SO₃H (or a salt thereof), the equivalent weight is somewhat lower because of the lower molecular weight of the monomer unit containing a cation exchange group. For the preferred IXR range of about 8 to about 23, the corresponding equivalent weight range is about 575 EW to about 1325 EW. IXR for this polymer can be related to equivalent weight using the following formula: 50 IXR + 178 = EW.

### Process for making the PFSI solution

The process for preparing perfluorosulfonated ion exchange polymers according to the present invention involves heating a slurry containing a PFSI resin, ether and water in a mechanically agitated pressurized vessel to an elevated temperature, preferably between 180°C to 280°C and most preferably between 200°C to 250°C, so as to totally dissolve the resin in the solution. The PFSI content in the solution is preferred to be from 1 to 20wt% and most preferably between 5-12wt%. The organic ether can be from 5-85wt% and most preferably between 10-40wt%. The pressure is the vapor pressure of the solvent mixture under the temperature employed and it does not change during the dissolution process that is typically a few hours. The vessel pressure returns to near ambient pressure at the end of the run when it cools down to room temperature. On the contrary, the commercial process that uses a water/alcohols mixture experiences an extra pressure build up due to the formation of VOC's for making the PFSI acid dispersions.

According to the process of the present invention, the resin is totally dissolved in the solution. The complete dissolution of the PFSI resin leads to the formation of clear homogeneous solution that can be realized visually. The dissolved solid content (PFSI resin) of the solution can be determined by drying out the solvents, the water and organic ether compound in a vacuum oven or other known means.

The dissolved solid content (PFSI resin) of the solution is recovered and converted into a film for lamination on fabrics, or the resin itself can be coated onto fabrics. In particular, fabrics containing a portion of nylon filaments, or made completely from nylon filaments, are useful with the present invention. These laminated or coated fabrics are particularly useful in chemical barrier applications.

### EXAMPLES

The experiments shown in the following examples are carried out with a 300-ml Hastelloy-C autoclave reactor made by Autoclave Engineering. Two types of PFSI resins were used in the present invention. The copolymer of TFE and PDMOF, e.g. the Nafion® PFSI, was produced by E.I. du Pont de Nemours and Company. The other PFSI resin is the copolymer of TFE and POPF that was invented by the Dow Chemical Company. The organic ethers were purchased from the Aldrich Company and used as received. In case water only solution is needed, one could distill out the lower boiling point ethers.

### Example 1

A 300-ml Hastelloy-C autoclave was charged with 17.4g Nafion^{®}-H⁺ resin with EW of 1070 g/mol, 46.1 g THP and 138.3g D.I. H₂O. The Nafion^{®}-H⁺ resin has 7.2wt% moisture. To purge the reactor, the autoclave was first pressurized with N₂ to 600psig and then N₂ was released. The mixture was agitated mechanically at 1000 rpm and heated for 5 hours at 210°C. The reactor pressure was at 410 psig during the run. The recovered solution was milky white. Filtration of the solution showed that the PFSI resin was totally dissolved.

### Example 2

The PFSI solutions with resin in different cation forms were prepared using the procedure of Example 1. The Nafion^{®}-H⁺ resin was converted to the Li⁺ and Na⁺ form by stirring the resin with 10X molar ratio of LiCl or NaCl solution, respectively for two hours. After filtering and washing the resin with deionized water, the exchange process was repeated once more with the same ion ratio. The Nafion^{®}-Li⁺ solution was made with 46.1 g THP, 23.0g Nafion^{®}-Li⁺ (30wt% moisture), and 132.2g D.I. H₂O. At 210°C, the reactor pressure was at 405psig. The resin was totally dissolved after 5 hours under 1000 rpm agitation. The Nafion^{®}-Na⁺ solution was prepared with the same recipe.

### Example 3

The Nafion^{®}-Na⁺ solution was also prepared with ethylene glycol diethyl ether (diglyme, C₂H₅OCH₂CH₂OC₂H₅). The 300-ml autoclave was charged with 16.9g Nafion^{®}-Na⁺. 46.2g ethylene glycol diethyl ether, and 138.1g D.I. H₂O. The run was carried out at 220°C with 1000rpm agitation for 5 hours. The reactor pressure was at 400psig. The resin was totally dissolved.

### Example 4

The solution of a TFE/POPF copolymer resin in the H+ form was prepared with the procedure of Example 1. The resin has an EW of 860 g/mol and moisture content of 12wt%. The 300-ml reactor was charged with 18.2g PFSI resin, 46.2g THP, and 136.4g D.I. H₂O. The reactor pressure was 405psig at 210°C. The resin was totally dissolved after 5 hours under 1000 rpm agitation.

### Comparative Example

The 300-ml reactor was charged with 16.9g Nafion^{®}-Na⁺ resin, 45.9g ethanol, and 138.6g D.I. H2O. The run was carried out at 210°C and 1000 rpm agitation. The reactor pressure was at 350psig. Only 20% of the Nafion^{®}-Na⁺ resin was dissolved in the solution after 5 hours.

## Claims

1. A process for making a solution of perfluorosulfonated ion exchange polymer comprising:
heating a slurry containing a perfluorosulfonated ion exchange polymer resin, and an organic ether compound selected from the group consisting of tetrahydropyran and ethyl propyl ether;
and water in a mechanically agitated pressurized vessel to an elevated temperature between 200°C to 250°C, so as to totally dissolve the resin In the ether compound and water solution; and
recovering the perfluorosulfonated ion exchange polymer solution.

2. The process of claim 1, wherein the ether to water ratio can range from 5/95 to 80/20 by weight.

3. The process of claim 1, wherein the perfluorosulfonated ion exchange polymer resin can be the copolymer of TFE/PDMOP or TFE/POPF and consequently been hydrolyzed and ion exchanged to the final form -SO3X, where X can be H, Li, Na, K or N(R¹)(R²)(R³)(R⁴) and R¹, R², R³, and R⁴ are the same or different and are H, CH₃, C₂H₅ and higher alkyl groups.

4. The process of Claim 1, further comprising:
removing the water and organic ether compound from the recovered perfluorosulfonated ion exchange polymer solution so that a solid content comprising a perfluorosulfonated ion exchange polymer resin remains.

5. The process of claim 4, further comprising converting the resin into a film.

6. The process of claim 4, wherein the resin is coated onto a fabric.

7. The process of claim 5, wherein the film is laminated onto a fabric.

8. The laminated fabric made by the process of claim 7.

## Patentansprüche

1. Verfahren zum Herstellen einer Lösung von perfluorsulfoniertem Ionenaustauschpolymer, welches umfasst:
Erhitzen einer Aufschlämmung, die ein perfluorsulfoniertes Ionenaustauschpolymerharz enthält, sowie eine organische Etherverbindung, die ausgewählt ist aus der Gruppe, bestehend aus Tetrahydropyran und Ethylpropylether,
und Wasser in einem mechanisch bewegten Druckbehälter bis zu einer erhöhten Temperatur zwischen 200° und 250°C, um so das Harz in der Lösung von Etherverbindung und Wasser vollständig aufzulösen; sowie
Gewinnen der Lösung des perfluorsulfonierten Ionenaustauschpolymers.

2. Verfahren nach Anspruch 1, wobei das Gewichtsverhältnis von Ether zu Wasser im Bereich von 5:95 bis 80:20 liegen kann.

3. Verfahren nach Anspruch 1, wobei das perfluorsulfonierte Ionenaustauschpolymerharz das Copolymer von TFE/PDMOP oder TFE/POPF sein kann und dementsprechend hydrolysiert werden kann und zu der abschließenden Form -SO₃X im Ionenaustausch überführt werden kann, worin X H, Li, Na, K oder N(R¹)(R²)(R³)(R⁴) sein kann und R¹, R², R³ und R⁴ gleich oder verschieden sind und H, CH₃, C₂H₅ und höhere Alkyl-Gruppen sind.

4. Verfahren nach Anspruch 1, ferner umfassend:
Entfernen des Wassers und der organischen Etherverbindung aus der gewonnenen Lösung von perfluorsulfoniertem Ionenaustauschpolymer, so dass ein Gehalt an Feststoff zurückbleibt, der ein perfluorsulfoniertes Ionenaustauschpolymerharz aufweist.

5. Verfahren nach Anspruch 4, ferner umfassend das Umwandeln des Harzes in einen Film.

6. Verfahren nach Anspruch 4, wobei ein textiles Flächengebilde mit dem Harz beschichtet wird.

7. Verfahren nach Anspruch 5, wobei ein textiles Flächengebilde mit dem Film kaschiert wird.

8. Kaschiertes textiles Flächengebilde, hergestellt mit Hilfe des Verfahrens nach Anspruch 7.

## Revendications

1. Procédé de fabrication d'une solution de polymère perfluorosulfoné d'échange d'ions comprenant:
le chauffage d'une suspension contenant une résine de polymère perfluorosulfoné d'échange d'ions, et un composé d'éther organique choisi parmi le groupe constitué du tétrahydropyrane et de l'éther d'éthyl propyle;
et de l'eau dans un récipient sous pression mécaniquement agité jusqu'à une température élevée entre 200°C à 250°C, afin de dissoudre totalement la résine dans le composé d'éther et la solution d'eau; et
la récupération de la solution de polymère perfluorosulfoné d'échange d'ions.

2. Procédé selon la revendication 1, dans lequel le rapport éther sur eau peut s'étendre de 5/95 à 80/20 en poids.

3. Procédé selon la revendication 1, dans lequel la résine de polymère perfluorosulfoné d'échange d'ions peut être le copolymère de TFE/PDMOP ou de TFE/POPF et en conséquence être hydrolysée et échangée avec des ions vers la forme finale -SO₃X, où X peut être H, Li, Na, K ou N(R¹)(R²)(R³)(R⁴) et R¹, R², R³ et R⁴ sont identiques ou différents et sont H, CH₃, C₂H₅ et des groupes alkyle supérieur.

4. Procédé selon la revendication 1, comprenant en outre:
l'élimination de l'eau et du composé d'éther organique à partir de la solution de polymère perfluorosulfoné d'échange d'ions récupérée de sorte qu'une teneur en matières solides comprenant une résine de polymère perfluorosulfoné d'échange d'ions demeure.

5. Procédé selon la revendication 4, comprenant en outre la conversion de la résine en un film.

6. Procédé selon la revendication 4, dans lequel la résine est revêtue sur un textile.

7. Procédé selon la revendication 5, dans lequel le film est stratifié sur un textile.

8. Textile stratifié fabriqué par le procédé selon la revendication 7.
